# EUROPEAN PATENT SPECIFICATION

(11) **EP 1 175 831 B1**
(45) Date of publication and mention of the grant of the patent: **02.02.2005**
(21) Application number: 01118314.2
(22) Date of filing: 27.07.2001
(51) Int. Cl.: A01K 27/00

(54) **Leash with opening handgrip**
Leine mit Handgriff, der geöffnet werden kann
Laisse avec un manette ouvrable

(30) Priority: 28.07.2000 IT VR000071
(43) Date of publication of application: 30.01.2002
(73) Proprietor: FERPLAST SPA, I-36070 Castelgomberto (IT)
(72) Inventor: Pellegrini, Alfred, c/o FERPLAST Spa, 36070 Castelgomberto (IT); Vaccari, Carlo, c/o FERPLAST Spa, 36070 Castelgomberto (IT)
(74) Representative: Petraz, Gilberto Luigi

(56) References cited:
- US-A- 153 724
- US-A- 5 462 019
- US-A- 5 709 172

## Description

### TECHNICAL FIELD

This invention concerns a leash with an opening handgrip for blocking pets when they are being walked.

More in particular, this invention refers to a jerk-resistant leash for walking pets such as, for example, dogs of various sizes, and which has a structure that allows it to be easily attached temporarily to any fixed structure.

### BACKGROUND ART

It is a known fact that pets that have to be walked are usually accompanied using leashes with a handgrip which can be held by the accompanying person and with a spring clip for attaching the leash to the animal's collar.

One drawback is represented by the fact that the handgrip of the leash is not always easy to attach to a fixed structure, consisting in the majority of cases of an upright such as for example the pole of a road sign. The handgrip, in fact, generally consists of a closed ring which cannot therefore be attached to poles that are taller than the accompanying person.

Another drawback is represented by the fact that, in order to achieve temporary blocking, the cord or chain of the leash is passed through the ring already attached to the fixed structure in order to form a knot. For this operation to be successful, the spring clip has to be detached from the animal's collar, thus forcing the accompanying person to hold onto the pet in the meantime. This often creates difficulties and sometimes confusion for those who are less expert or if the pet is particularly lively.

Moreover, the handgrip generally consists of a ring which, once it is attached to the fixed structure, can slide down until it is resting on the ground as a result of repeated movements of the animal.

In these conditions the handgrip of the leash can easily be soiled by the animal or by dirt on the ground.

This problem often creates difficulties for the accompanying person as the handgrip has to be cleaned, also to ensure secure and reliable gripping of the leash.

The US-A-5 462 019 describes an animal leash showing a clamp that can be adjusted along the cable. The clamp has an eye for receiving a snap connector on the end of the cable. However this lash does not provide for the necessary stiffness of the handgrip, so that the user may be forced to use both hands, loose time, when he wants to secure the leash to a the fixed structure.

The US-A-5 709 172 shows a dog leash which has a clip for attachment to a collar at one end and has a hand-hold at the other. The leash has a sliding ring on which a clip may be adjustably fastened to secure the leash to a fixed object, such as a tree.

### DESCRIPTION OF THE INVENTION

The aim of this invention is to provide a leash with a handgrip which can be opened and easily and quickly attached to any fixed structure in order to allow temporary parking of the animal attached to it.

This invention also proposes to provide a leash which is easy to use and grip.

Another aim of this invention is to provide a leash with an opening handgrip with a limited production cost so as to be advantageous from a financial point of view.

This is achieved by means of a leash with an opening handgrip with the features described in the main claim.

The dependent claims describe advantageous embodiments of the invention.

The leash according to this invention comprises a cord or strap, one end of which is integral with a handgrip that can be opened, while the other end comprises a spring clip, it being possible to close said opening handgrip by means of a removable fastening of two of its adjacent parts.

According to this invention the handgrip consists of a reinforcement of the cord by a sufficient length to form a toroidal structure that can be securely gripped by the user.

The handgrip can be closed by any appropriate blocking means that allows the temporary fixing of the leash to any structure in order to park the animal during the absence of the person accompanying it.

The blocking means may consist of a strap which can be folded away for fixing by means of velcro or by any appropriate removable fixing means.

According to a particularly advantageous embodiment of the invention, the leash is also equipped with a retainer that can be wound around any fixed structure.

According to the invention, the retainer consists of a tab, integral with an elastic element fastened to the handgrip, presenting means of temporary fixing to said handgrip.

The temporary fixing of the tab to the handgrip is achieved by any appropriate blocking means that make it possible to keep the leash attached to any structure in a relatively distal position with respect to the ground.

The blocking means may consist of velcro or any other appropriate removable fixing means.

### DESCRIPTION OF THE DRAWINGS

Other features and advantages of the invention will become evident on reading the following description of one embodiment of the invention, given as a non-binding example, with the help of the enclosed drawings, in which:
- figure 1 is a side view of a leash with an opening handgrip for a leash according to the invention;
- figure 2 shows a similar view to figure 1, the leash being blocked against an upright.

### DESCRIPTION OF A FORM OF EMBODIMENT OF THE INVENTION

In the figures, reference number 10 generally indicates a leash with an opening handgrip, in the case in question a leash 10, which comprises a cord or strap 12 equipped at its free end with a spring catch (not shown) which can be fixed to the animal's collar.

The handgrip 11 can consist of a reinforcement strip 14 attached to the cord 12 for example by means of stitching, thus making the handgrip 11, consisting of both the cord or strap 12 and the strip 14, sufficiently rigid to allow it to be easily gripped by the user.

The strip 14 can be attached to the end of the cord or strap 12 which is opposite to the end to which the spring clip is attached, and by a length sufficient to form a toroidal structure suitable for being gripped by the user.

In correspondence with the connecting portion between the reinforcement strip 14 and the cord or strap 12, is a protruding opening 17, integral with the strap 12 itself, designed to house a preferably metal ring 18.

When the handgrip 11 is in the closed position, the free end 19 of the handgrip 11 is inserted in the ring 18 and folded back on itself, having an end part equipped with removable fixing means 20 for fastening it to the portion of the handgrip 11 proximal to it.

These removable fixing means can be of -various types.

By way of example, they can consist of a piece of velcro®.

If the latter presents a relatively elongated longitudinal extension, then depending on the fixing point of the end flap 19 it is possible to vary the size of the inner space 21 circumscribed by the handgrip 11.

According to another variation (not shown), the end flap 19 has a slit or through hole, preferably longitudinal, designed to house a button integral with the portion of the handgrip 11 proximal to said hole.

According to yet another variation, the end flap 19 can be equipped with a bayonet connector comprising pins designed to be inserted in respective holes in a corresponding socket fixed to the handgrip 11.

According to a further variation, a rivet, inserted in an appropriate hole in the end flap 19, comprises a cavity designed to couple by means of engagement with a corresponding pin integral with the handgrip 11.

The ring 18 may also be fitted with a tab equipped with a partially toothed pin hinged to the ring 18.

When the end flap 19 is passed through the ring 18, the tab rotates, causing the teeth of the pin to grip the flap 19, blocking it in a certain position according to the amount of space required.

When the tab is raised, it releases the end flap 19 leaving the handgrip 11 open.

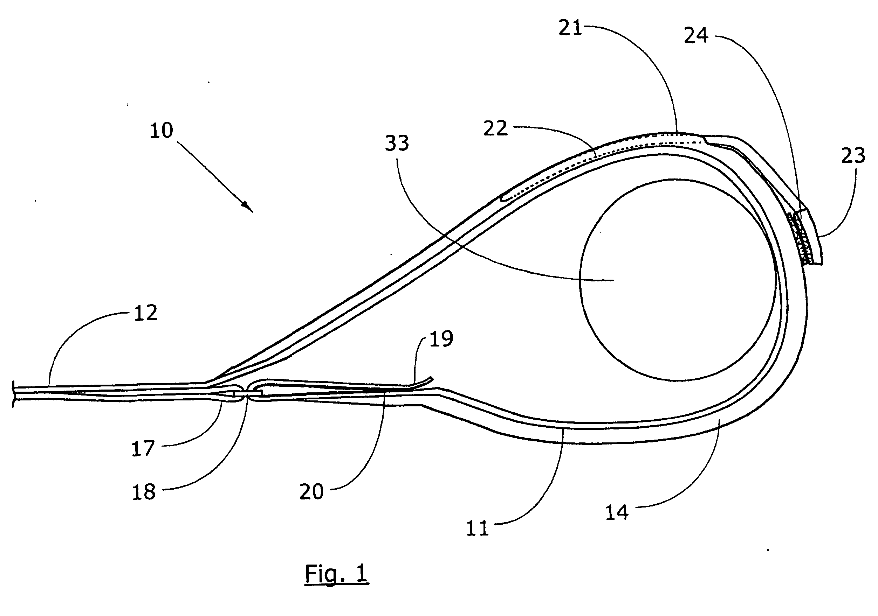

With reference to figure 1, the outer edge of the handgrip 11, starting from the connecting part 16, can be fitted with a pocket 21 designed to contain an elastic strap that slides freely inside the pocket in which it can be fully contained.

One end of the elastic strap 22 is fixed inside the pocket 21 while the other free end is fitted with a tab 23 equipped with means for temporary fixing to the handgrip 11.

According to a variation not shown in the drawings, one end of the strap 22 can be fixed directly to the handgrip 11 in the absence of the pocket 21.

These temporary fixing means can consist of a piece of velcro® 24.

If the portion of velcro® 24 integral with the handgrip 11 has a relatively elongated longitudinal extension, then depending on the fixing point of the tab 23 it is possible to vary the length of the elastic strap 22 protruding from the pocket 21.

According to a variation not shown, the tab 23 may have a through hole or slit, preferably longitudinal, designed to house a button integral with the portion of the handgrip 11 proximal to said hole.

According to another embodiment not shown, the tab 23 can be equipped with a bayonet connector comprising pins suitable for being inserted into respective holes in a corresponding socket fixed to the handgrip 11.

According to yet another variation not shown, a rivet is inserted in an appropriate hole in the tab and comprises a cavity suitable for being coupled, by means of engagement, to a corresponding pin integral with the handgrip 11.

It can be noted that a leash 10 according to this invention makes it possible to achieve all the predetermined aims. In particular, it can be easily and quickly attached to any fixed structure such as for example a pole 33 (fig. 1) in order to allow temporary parking of the animal attached to it.

With reference to figure 1, the parking block is guaranteed by releasing the cord or strap from the ring 18, passing the cord or strap 12 around the pole 33 and then closing the handgrip by means of the ring 18 and the fixing means; unlike the solutions known in the background art, this operation is possible without detaching the spring clip from the animal's collar, but by simply opening the handgrip 11 on the side of the end flap 19.

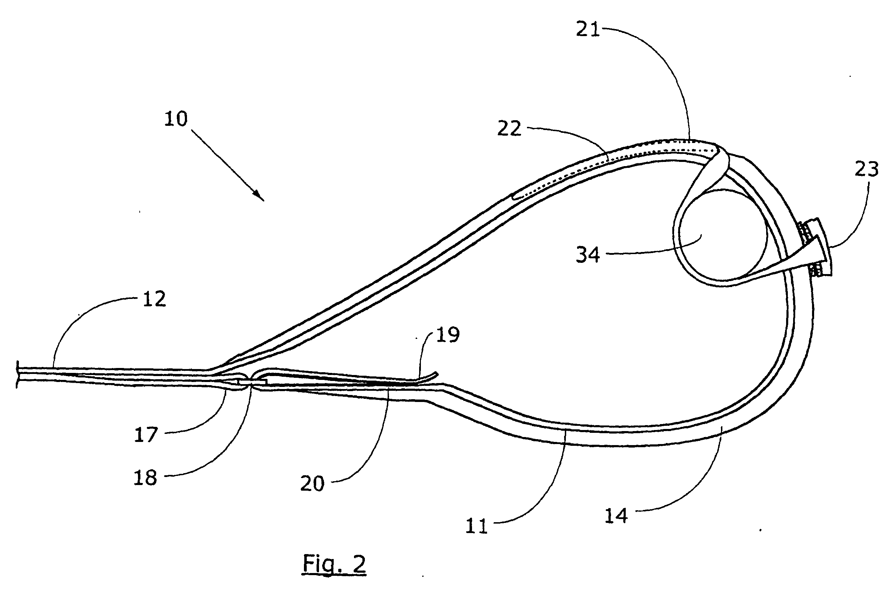

With reference to figure 2, the leash 10 according to this invention is in this case fixed to an upright 34.

In this case, by pulling the tab 23 the elastic strap 22 is extracted from the pocket 21 far enough to allow it to be wound around the upright 34.

The handgrip 11 thus remains firmly anchored to the fixed structure 34 without the risk of it slipping down towards the ground and becoming dirty.

Thanks to its elasticity and length, the strap 22 can be wound round the upright 34 several times to ensure firm anchorage of the handgrip 11 to the fixed structure 34, thus constituting an effective means for the temporary parking of the animal.

## Claims

1. A leash (10) comprising a cord or strap (12) presenting one end integral with a handgrip (11) and the other end equipped with a spring clip, whereby said handgrip (11) can be opened and closed by means of two adjacent parts **characterised in that** said handgrip (11) consists of a reinforcement attached to the cord or strap (12) by a sufficient length to form a toroidal structure that can be securely gripped by the user.

2. A leash (10) according to claim 1, **characterised in that** said reinforcement consists of a strip (14) fixed to said handgrip (11).

3. A leash (10) according to claim 2, **characterised in that** said strip is fixed to said handgrip (11) by means of stitching.

4. A leash (10) according to anyone of the preceding claims, **characterised in that** said handgrip (11) can be closed by means of an appropriate fastening means that allows the temporary fixing of said leash (10) to any structure (33) by forming a retainer for parking the animal during the absence of the person accompanying it.

5. A leash (10) according to anyone of the preceding claims, **characterised in that** in correspondence with a connecting portion between said reinforcement strip and said cord or strap (12) it comprises a protruding opening (17), integral with the cord (12) and suitable for housing a ring (18).

6. A leash (10) according to anyone of the preceding claims **characterised in that** it comprises an end flap (19) which can be directly attached, by means of removable fixing means, to a portion of said handgrip (11).

7. A leash (10) according to claim 6, **characterised in that** said removable fixing means either consist of a button and a corresponding hole, or a bayonet connector and a corresponding socket, or a rivet and a corresponding pin, or a tab equipped with a partially toothed pin hinged to said ring (18) or a piece of velcro®.

8. A leash (10) according to anyone of the preceding claims, **characterised in that** said handgrip comprises a retainer element (23) that can be attached to a fixed structure (34).

9. A leash (10) according to claim 8, **characterised in that** said retainer element consists of a tab (23), integral with an elastic element (22) attached to the handgrip (11), comprising means for temporary fixing to said handgrip.

10. A leash (10) according to claim 9, **characterised in that** said handgrip (11) comprises a pocket (21) designed to contain said elastic element (22) that slides freely inside the pocket and in which it can be fully contained.

11. A leash (10) according to anyone of claims 9 and 10, **characterised in that** one end, not affected by said tab (23), of said elastic element (22) is directly attached to said handgrip (11).

12. A leash (10) according to anyone of claims 9 to 11, **characterised in that** said elastic element consists of a strap.

13. A leash (10) according to anyone of claims 9 to 12, **characterised in that** said temporary fixing means consist of a piece of velcro® (24).

14. A leash (10) according to claim 9, **characterised in that** said temporary fixing means either consist of a button and a corresponding hole, or a bayonet connector and a corresponding socket, or a rivet and a corresponding pin.

## Patentansprüche

1. Leine (10), mit einem Seil oder einen Streifen (12), der an einem Ende einen integrierten Handgriff (11) aufweist, während das andere Ende mit einer Federklemme ausgerüstet ist, wobei der Handgriff (11) mittels zweier benachbart angeordneter Abschnitte geöffnet und geschlossen werden kann, **dadurch gekennzeichnet, dass** der Handgriff (11) eine Verstärkung aufweist, die an dem Seil oder dem Streifen (12) angebracht ist, über eine bestimmte ausreichende Länge, um eine toroidale Struktur auszubilden, die von einem Benutzer sicher gegriffen werden kann.

2. Leine (10) nach Anspruch 1, **dadurch gekennzeichnet, dass** die Verstärkung aus einem Streifen (14) besteht, der an dem Handgriff (11) fixiert ist.

3. Leine (10) nach Anspruch 2, **dadurch gekennzeichnet, dass** der Streifen an dem Handgriff (11) mittels Vernähen fixiert ist.

4. Leine (10) nach einem der vorhergehenden Ansprüche, **dadurch gekennzeichnet, dass** der Handgriff durch geeignete Befestigungsmittel geschlossen werden kann, die das temporäre Fixieren der Leine (10) an jeglicher Struktur (33) erlauben, indem eine Halteeinrichtung ausgebildet wird, um das Tier während der Abwesenheit der Begleitperson abzustellen.

5. Leine (10) nach einem der vorhergehenden Ansprüche, **dadurch gekennzeichnet, dass** korrespondierend zu dem Verbindungsabschnitt zwischen dem Verstärkungsstreifen und dem Seil oder dem Streifen (12) eine vorstehende Öffnung (17) vorhanden ist, die integral mit dem Seil (12) ausgebildet ist, und die dazu geeignet ist, einen Ring (18) aufzunehmen.

6. Leine (10) nach einem der vorhergehenden Ansprüche, **dadurch gekennzeichnet, dass** sie ein Endstück (19) aufweist, welches mittels einer lösbaren Fixiereinrichtung direkt an einem Abschnitt des Handgriffes (11) angebracht werden kann.

7. Leine (10) nach Anspruch 6, **dadurch gekennzeichnet, dass** die lösbare Fixiereinrichtung entweder aus einem Knopf und einer zugehörigen Öffnung oder aus einem Bajonetverbinder und einer zugehörigen Aufnahme oder aus einer Niete und einem zugehörigen Stift oder aus einem Vorsprung besteht, der mit einem teilweise gezahnten Stift ausgerüstet ist, der an dem Ring (18) angelenkt ist, oder aus einem Stück Velcro ® besteht.

8. Leine (10) nach einem der vorhergehenden Ansprüche, **dadurch gekennzeichnet, dass** der Handgriff ein Halteelement (23) aufweist, welches an einer feststehenden Struktur (34) angebracht werden kann.

9. Leine (10) nach Anspruch 8, **dadurch gekennzeichnet, dass** das Halteelement einen Vorsprung (23) aufweist, integriert mit einem elastischen Element (22), welches an dem Handgriff (11) angebracht ist, mit Mitteln zum temporären Festlegen an dem Handgriff.

10. Leine (10) nach Anspruch 9, **dadurch gekennzeichnet, dass** der Handgriff (11) eine Tasche (21) umfasst, die derart ausgebildet ist, dass sie das elastische Element (22) aufnimmt, welches frei innerhalb der Tasche verschiebbar ist und in die es vollständig aufgenommen werden kann.

11. Leine (10) nach einem der vorhergehenden Ansprüche 9 und 10, **dadurch gekennzeichnet, dass** ein Ende des elastischen Elements (22), auf welches durch den Vorsprung (23) nicht direkt eingewirkt wird, direkt an dem Handgriff (11) angebracht ist.

12. Leine (10) nach einem der vorhergehenden Ansprüche 9 bis 11, **dadurch gekennzeichnet, dass** das elastische Element aus einem Streifen besteht.

13. Leine (10) nach einem der vorhergehenden Ansprüche 9 bis 12, **dadurch gekennzeichnet, dass** die temporären Fixiermittel aus einem Stück von Velcro ® (24) bestehen.

14. Leine (10) nach Anspruch 9, **dadurch gekennzeichnet, dass** die temporären Fixiermittel entweder aus einem Knopf und einer zugehörigen Öffnung, oder aus einem Bajonetverbinder und einer zugehörigen Fassung, oder aus einer Niete und einem zugehörigen Stift bestehen.

## Revendications

1. Laisse (10) comprenant une corde ou un ruban (12) dont une extrémité est solidaire d'une poignée (11) et dont l'autre extrémité est équipée d'une pince à ressort, ladite poignée (11) pouvant être ouverte et fermée au moyen de deux parties adjacentes, **caractérisée en ce que** ladite poignée (11) est constituée d'un renforcement attaché à la corde ou au ruban (12) d'une longueur suffisante pour former une structure toroïdale qui peut être saisie de façon sûre par l'utilisateur.

2. Laisse (10) selon la revendication 1, **caractérisée en ce que** ledit renforcement est constitué d'une bande (14) fixée à ladite poignée (11).

3. Laisse (10) selon la revendication 2, **caractérisée en ce que** ladite bande est fixée à ladite poignée (11) au moyen d'une couture.

4. Laisse (10) selon l'une quelconque des revendications précédentes, **caractérisée en ce que** ladite poignée (11) peut être fermée à l'aide d'un moyen de fixation approprié qui permet de fixer temporairement de ladite laisse (10) à une structure quelconque (33) en formant une retenue destinée à immobiliser l'animal en l'absence de la personne d'accompagnement.

5. Laisse (10) selon l'une quelconque des revendications précédentes, **caractérisée en ce que**, en correspondance d'une portion de raccordement entre ladite bande de renforcement et ladite corde ou ledit ruban (12), elle comprend une ouverture saillante (17), solidaire de la corde (12) et appropriée à recevoir un anneau (18).

6. Laisse (10) selon l'une quelconque des revendications précédentes, **caractérisée en ce qu'**elle comprend un rabat d'extrémité (19) qui peut être directement attaché, à l'aide de moyens de fixation amovibles, à une portion de ladite poignée (11).

7. Laisse (10) selon la revendication 6, **caractérisée en ce que** lesdits moyens de fixation amovibles consistent en un bouton et un trou correspondant, ou bien en un connecteur à baïonnette et une embase correspondante, ou un rivet et une broche correspondante, ou une languette équipée d'une broche partiellement dentée articulée sur ledit anneau (18) ou une pièce de velcro@.

8. Laisse (10) selon l'une quelconque des revendications précédentes, **caractérisée en ce que** ladite poignée comprend un élément de retenue (23) qui peut être attaché à une structure fixe (34).

9. Laisse (10) selon la revendication 8, **caractérisée en ce que** ledit élément de retenue consiste en une languette (23), solidaire d'un élément élastique (22) attaché à la poignée (11), comprenant des moyens de fixation temporaire à ladite poignée.

10. Laisse (10) selon la revendication 9, **caractérisée en ce que** ladite poignée (11) comprend une poche (21) destinée à contenir ledit élément élastique (22) qui glisse librement à l'intérieur de la poche et dans laquelle il peut être contenu entièrement.

11. Laisse (10) selon l'une quelconque des revendications 9 et 10, **caractérisée en ce qu'**une extrémité, non affectée par ladite languette (23), dudit élément élastique (22) est directement attachée à ladite poignée (11).

12. Laisse (10) selon l'une quelconque des revendications 9 à 11, **caractérisée en ce que** ledit élément élastique consiste en un ruban.

13. Laisse (10) selon l'une quelconque des revendications 9 à 12, **caractérisée en ce que** lesdits moyens de fixation temporaire consistent en une pièce de velcro® (24).

14. Laisse (10) selon la revendication 9, **caractérisée en ce que** lesdits moyens de fixation temporaire consistent en un bouton et un trou correspondant, ou bien en un connecteur à baïonnette et une embase correspondante, ou un rivet et une broche correspondante.
